# EUROPÄISCHE PATENTSCHRIFT

(11) **EP 0 858 933 B1**
(45) Veröffentlichungstag und Bekanntmachung des Hinweises auf die Patenterteilung: **09.01.2002**
(21) Anmeldenummer: 98102519.0
(22) Anmeldetag: 13.02.1998
(51) Int. Cl.: B60R 21/20

(54) **Knie-Rückhalteeinrichtung für Fahrzeuge**
Knee bolster for a vehicle
Dispositif de protection des génoux dans un véhicule

(30) Priorität: 18.02.1997 DE 29702797 U
(43) Veröffentlichungstag der Anmeldung: 19.08.1998
(73) Patentinhaber: TRW Occupant Restraint Systems GmbH & Co. KG, 73551 Alfdorf (DE)
(72) Erfinder: Schröter, Rainer, 85293 Reichertshausen (DE)
(74) Vertreter: Degwert, Hartmut, Dipl.-Phys.

(56) Entgegenhaltungen:
- EP-A- 0 684 164
- DE-A- 3 908 713
- DE-U- 29 611 869

## Beschreibung

Die Erfindung betrifft eine Knie-Rückhalteeinrichtung für Fahrzeuge, mit einer Kniefängerplatte, die in Richtung der Knie eines Fahrzeuginsassen bewegbar ist, einer mit einer Fahrzeugstruktur verbindbaren Grundplatte, die wenigstens eine Öffnung zum Anschluß an einen Gasgenerator aufweist, und einer im Ruhezustand zwischen der Grundplatte und der Kniefängerplatte gefalteten Wandung aus flexiblem Material, die entlang eines ersten geschlossenen Randes mit der Grundplatte und entlang eines zweiten geschlossenen Randes mit der Kniefängerplatte verbunden ist.

Eine Knie-Rückhalteeinrichtung dieser Gattung ist aus dem deutschen Gebrauchsmuster Nr. 296 11 869.9 bekannt. Die dort beschriebene Knie-Rückhalteeinrichtung weist eine Kniefängerplatte auf, die in Richtung der Knie eines Fahrzeuginsassen bewegbar ist. Solche Knie-Rückhalteeinrichtungen werden benötigt, da die durch ein aufblasbares Gaskissen im Oberkörperbereich eines Fahrzeuginsassen erreichbare Rückhaltewirkung bei einem Fahrzeugaufprall unzureichend ist, wenn nicht der Körper des Fahrzeuginsassen zusätzlich durch einen angelegten Sicherheitsgurt zurückgehalten wird. Da durch starr im Fahrzeug eingebaute Kniepolster die Bewegungsfreiheit eingeschränkt wird, kommen hier bewegliche Kniepolster zum Einsatz, die bei einem Frontalaufprall des Fahrzeugs durch einen plötzlich aufgeblasenen Gassack in Richtung der Knie des Fahrzeuginsassen verlagert werden. Der Gassack wird durch eine mit der Fahrzeugstruktur verbundene Grundplatte, die wenigstens eine Öffnung zur Verbindung mit einem Gasgenerator aufweist, und eine im Ruhezustand zwischen der Grundplatte und der Kniefängerplatte gefaltete Wandung aus flexiblem Material gebildet, die entlang eines ersten geschlossenen Randes mit der Grundplatte und entlang eines zweiten geschlossenen Randes mit der Kniefängerplatte verbunden ist. Eine solche Konstruktion kann optional vorgesehen sein, da sie nicht in die Fahrzeugstruktur integriert ist. Während gattungsgemäße Knie-Rückhalteeinrichtungen bei korrekt plazierten Fahrzeuginsassen eine ausreichende Schutzwirkung zeigen, treten bei Fahrzeuginsassen, die nicht in der normalen Position auf dem Fahrzeugsitz sitzen, diesbezüglich Probleme auf. Da Knie-Rückhalteeinrichtungen nach dem Stand der Technik während des Aufblasvorgangs in ihrem Bewegungsverlauf nicht gesteuert werden können, kann die Position der Kniefängerplatte bei verfrühtem Aufprall der Knie eines Fahrzeuginsassen so ungünstig sein, daß die gewünschte Schutzwirkung nicht erzielt wird.

Mit der erfindungsgemäßen Knie-Rückhalteeinrichtung wird eine Steuerung der Bewegungsbahn der Kniefängerplatte während des Aufblasvorgangs ermöglicht. Die Bewegung der Kniefängerplatte wird während des Aufblasvorgangs so gesteuert, daß auch bei einem Auftreffen der Knie des Fahrzeuginsassen vor dem Erreichen der Endstellung eine ausreichende Schutzwirkung gegeben ist.

Hierzu ist bei einer gattungsgemäßen Knie-Rückhalteeinrichtung eine erste, in Fahrzeugquerrichtung verlaufende Kante der Kniefängerplatte schwenkbeweglich und lösbar an der Grundplatte gehalten. Eine der ersten Kante gegenüberliegende zweite Kante der Kniefängerplatte ist mit einer ausreißbaren Befestigung an der Grundplatte gehalten, die bei Aktivierung des Gasgenerators durch den Dehnungsdruck der sich entfaltenden Wandung lösbar ist, bevor die Kniefängerplatte um ihre erste Kante verschwenkt wird. Nachfolgend wird die erste Kante der Kniefängerplatte von der Grundplatte gelöst. Der Bewegungsablauf der Kniefängerplatte wird dadurch gesteuert, daß die Kniefängerplatte nach Aktivierung des Gasgenerators an einer Kante zurückgehalten wird und die so erzielte Bewegungskomponente bis zum Erreichen der Endposition erhalten bleibt. Durch das Verschwenken der Kniefängerplatte entsteht im Bereich der ausgeschwenkten zweiten Kante eine durch die flexible Wandung gebildete Tasche, die durch von dem Gasgenerator erzeugte Druckgase beaufschlagt wird. Die Kniefängerplatte erfährt also bereits eine aufwärts gerichtete Kraftkomponente, bevor sie von der Grundplatte gelöst wird, und bewegt sich von der Aktivierung des Gasgenerators an definiert schräg aufwärts in ihre Endstellung.

In Weiterbildung der Erfindung ist die erste Kante der Kniefängerplatte hinter einer fest an der Grundplatte angeordneten Leiste gehalten. Die Leiste gibt die Kniefängerplatte nicht frei, bevor diese nicht eine Bewegung in Richtung der zweiten Kante nach oben ausführt. Bevor die Kniefängerplatte von der Grundplatte gelöst ist, bewegt sie sich bereits in die vorgesehene Richtung.

Bei einer weiteren Ausführungsform der Erfindung ist innerhalb des durch die flexible Wandung, die Grundplatte und die Kniefängerplatte begrenzten Volumens ein einerseits mit der Grundplatte und andererseits mit der Kniefängerplatte verbundenes Segel vorgesehen. Nach Aktivierung des Gasgenerators wird das Segel in solcher Weise angeströmt, daß auf die Kniefängerplatte, nachdem die erste Kante der Kniefängerplatte von der Grundplatte gelöst ist, ein Druck ausgeübt wird, durch den sie im wesentlichen parallel zu ihrer ausgeschwenkten Lage sowie von der Grundplatte weg bewegt wird. Die Anbringung eines Segels innerhalb des Volumens ermöglicht eine noch genauere Steuerung des Bewegungsablaufs der Kniefängerplatte während des gesamten Aufblasvorgangs.

In Weiterbildung der Erfindung legt das Segel im entfalteten Zustand der Wandung zusammen mit dieser eine Endposition der Kniefängerplatte fest. Hierdurch kann zum einen die Endposition der Kniefängerplatte genauer und flexibler eingestellt werden, zum anderen wird diese Endposition der Kniefängerplatte durch die zusätzliche Abspannung des Segels stabilisiert. Ein seitlich oder nach oben oder unten gerichtetes Ausweichen der Kniefängerplatte bei schrägem Aufprall der Knie eines Fahrzeuginsassen wird durch diese Maßnahme verhindert oder beschränkt.

Weiterhin ist vorgesehen, die Grundplatte mit der Fahrzeugstruktur über ein mechanisches Deformationselement zu verbinden. Das Deformationselement bietet nach der Verzögerung durch das Gasvolumen eine zweite Verzögerungsstufe für den Fahrzeuginsassen. Bei schweren Insassen oder einem Aufprall mit hoher Geschwindigkeit stellt das Deformationsglied damit weiteren Verzögerungsweg zur Verfügung und kann in diesen Fällen ein zusätzliches Schutzpotential bieten.

Vorzugsweise besteht die Grundplatte aus einer mit der Fahrzeugstruktur verbundenen Rahmenplatte und einer hieran befestigten Trägerplatte. Die Trägerplatte trägt dabei den Gasgenerator. Ein solcher Aufbau begünstigt eine Modulbauweise, da verschiedene Gasgeneratoren zusammen mit ihrer Trägerplatte problemlos an einer vorhandenen Rahmenplatte angebracht werden können. Die Trägerplatte kann an der Rahmenplatte durch Nieten, Schrauben oder ähnliche Verbindungen befestigt sein.

Als eine die Erfindung weiterbildende Maßnahme ist die flexible Wandung entlang des ersten geschlossenen Randes zwischen Rahmenplatte und Trägerplatte eingeklemmt. Eine ausreichend zugfeste und druckdichte Befestigung der flexiblen Wandung an der Grundplatte wird durch diese Maßnahme auf einfache und kostengünstige Weise verwirklicht.

Gemäß einer anderen Ausführungsform der Erfindung ist zwischen Rahmenplatte und Trägerplatte eine Profilleiste gehalten, an der die flexible Wandung entlang des ersten geschlossenen Randes befestigt ist. Die Verwendung einer Profilleiste erleichtert die Anbringung der flexiblen Wandung an der Grundplatte. Die Profilleiste kann hierbei als Extruderprofil oder Spritzgußteil ausgeführt sein. Die Befestigung der flexiblen Wandung an der Profilleiste kann durch Nähen, Kleben, Umformen oder Falzen erfolgen.

Gemäß einer vorteilhaften Weiterbildung der Erfindung ist der zweite geschlossene Rand der flexiblen Wandung durch eine umlaufende Falte der flexiblen Wandung gebildet. Zur Verbindung des zweiten geschlossenen Randes mit der Kniefängerplatte weist diese eine umlaufende Bördelung auf, die die umlaufende Falte der flexiblen Wandung umgreift. Durch Umgreifen einer umlaufenden Falte kann die flexible Wandung sicher an der Kniefängerplatte befestigt werden, ohne daß eine aufwendige, druckdicht auszuführende Befestigung einer Endkante der flexiblen Wandung erforderlich wäre. Durch entsprechendes Gestalten der umlaufenden Falte und der Bördelung kann, beispielsweise durch einfaches Anhäufen des Wandungsmaterials, ein sicherer Halt in der umlaufenden Bördelung erreicht werden.

In Weiterbildung der Erfindung ist der zweite geschlossene Rand der flexiblen Wandung durch Einlegen eines Verstärkungsrings in die umlaufende Falte gebildet. Die Bördelung der Kniefängerplatte umgreift dann die umlaufende Falte und den eingelegten Verstärkungsring. Eine solche Ausführung ermöglicht eine hoch belastbare Anbindung der Kniefängerplatte an die flexible Wandung. Durch Vernähen der Falte nach dem Einlegen des Verstärkungsrings wird dieser gegen Herausrutschen gesichert.

Schließlich kann es vorteilhaft sein, daß die flexible Wandung einen von dem zweiten geschlossenen Rand umgebenen Abschnitt aufweist und einen Sack bildet. Die Öffnung dieses Sacks ist dabei durch den ersten geschlossenen Rand der flexiblen Wandung festgelegt. Der Einsatz einer sackförmigen Wandung kann hinsichtlich der Herstellbarkeit des Knie-Rückhaltesystems Vorteile bieten, da die Befestigung des zweiten geschlossenen Randes an der Kniefängerplatte nicht druckdicht ausgeführt werden muß.

Bevorzugte Ausführungsbeispiele der Erfindung sind in der Zeichnung dargestellt und werden nachfolgend beschrieben. Hierbei zeigen:
Fig. 1 eine perspektivische Teilschnittansicht einer ersten erfindungsgemäßen Knie-Rückhalteeinrichtung, die sich im Ruhezustand befindet;
Fig. 2 eine zweite Ausführungsform der Erfindung vor der Befestigung eines Teilmoduls an einer Fahrzeugstruktur.
Fig. 3 eine perspektivische Teilschnittansicht einer dritten bevorzugten Ausführungsform der Erfindung während des Aufblasvorgangs; und
Fig. 4 eine perspektivische Teilschnittansicht der Knie-Rückhalteeinrichtung der Fig. 3 in vollständig aufgeblasenem Zustand;

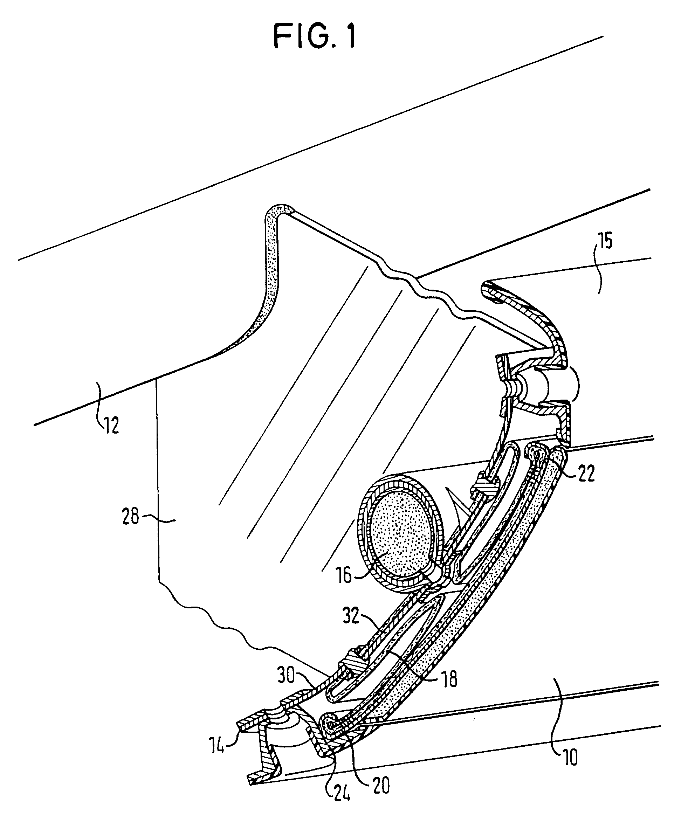

In der Fig. 1 ist eine Knie-Rückhalteeinrichtung für Fahrzeuge dargestellt, die eine in Richtung der Knie eines Fahrzeuginsassen bewegbare Kniefängerplatte 10 aufweist. Eine Grundplatte 14 ist mit der Fahrzeugstruktur 12 über ein mechanisches Deformationselement 28 verbunden. Die Grundplatte 14 weist in ihrem mittleren Bereich eine Öffnung für einströmende Druckgase auf. Ein Gasgenerator 16 ist mit der Grundplatte 14 verbunden und an deren Öffnung angeschlossen. In dem in der Fig. 1 dargestellten Ruhezustand der Knie-Rückhalteeinrichtung ist eine flexible Wandung 18 zwischen der Grundplatte 14 und der Kniefängerplatte 10 gefaltet. Eine erste, untere Kante 20 der Kniefängerplatte 10 ist schwenkbeweglich hinter einer Leiste 24 gehalten, die ihrerseits fest an der Grundplatte 14 angeordnet ist. Eine zweite, obere Kante 22 der Kniefängerplatte 10 ist mit einer ausreißbaren Sollbruchstelle des Verkleidungsmaterials an einem Abschnitt 15 der Innenverkleidung gehalten, der wiederum fest mit der Grundplatte 14 verbunden ist. Bei Aktivierung des Gasgenerators 16 füllt sich das durch die Grundplatte 14, die flexible Wandung 18 und die Kniefängerplatte 10 gebildete Volumen mit Druckgas, wodurch die Befestigung der oberen Kante 22 der Kniefängerplatte 10 ausreißt und diese von der Grundplatte 14 weggeschwenkt wird. Die untere Kante 20 der Kniefängerplatte 10 wird hinter der Leiste 24 zurückgehalten, bis sich die Kniefängerplatte 10 nach oben bewegt. Eine solche Bewegung der Kniefängerplatte 10 nach oben erfolgt unmittelbar nachdem sich die obere Kante 22 der Kniefängerplatte 10 gelöst hat, da der obenliegende Abschnitt der flexiblen Wandung 18 sich nun unter dem Einfluß der Druckgase von dem Gasgenerator 16 entfalten kann und eine nach oben gerichtete Kraft erzeugt. Bevor sich die untere Kante 20 der Kniefängerplatte 10 also von der Leiste 24 und damit der Grundplatte 14 löst, erfährt sie bereits eine nach oben gerichtete Bewegung. Die Bewegungsbahn der Kniefängerplatte 10 wird dadurch definiert eingeleitet, so daß auch eine unkontrollierte Bewegung der Kniefängerplatte 10 während des Aufblasvorgangs vermieden wird.

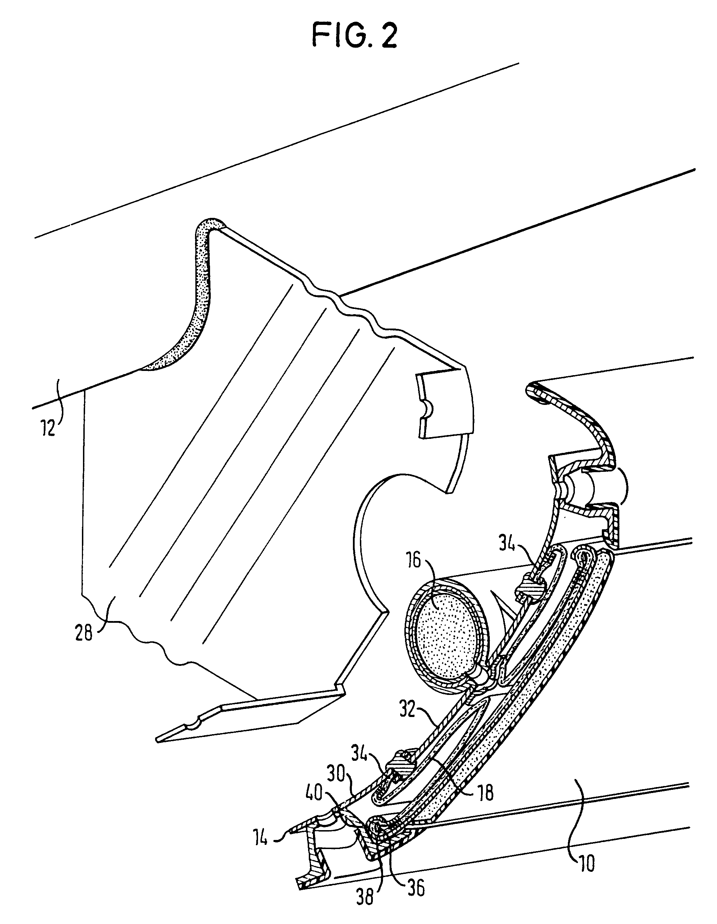

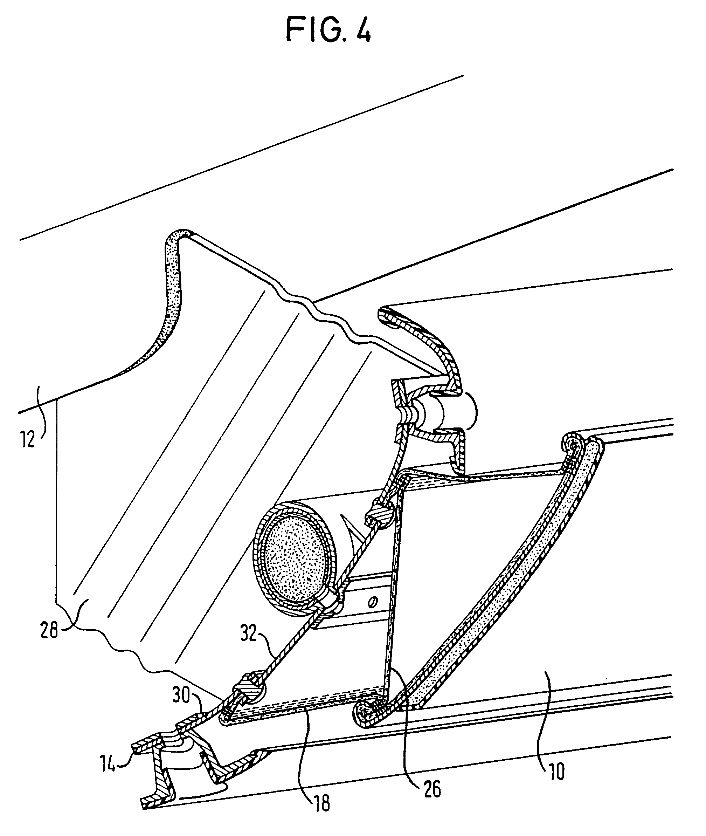

Fig. 2 zeigt eine weitere Ausführungsform der erfindungsgemäßen Knie-Rückhalteeinrichtung, vor der Befestigung eines Teilmoduls an einem mechanischen Deformationselement 28 und damit der Fahrzeugstruktur 12. Gut zu erkennen ist der modulare Aufbau der erfindungsgemäßen Knie-Rückhalteeinrichtung, der die optionale Ausrüstung eines Fahrzeugs mit der erfindungsgemäßen Knie-Rückhalteeinrichtung ermöglicht. Der Gasgenerator 16, die flexible Wandung 18 und die Kniefängerplatte 10 sind zusammen mit einem Abschnitt der Innenverkleidung an der Grundplatte 14 befestigt und können als Modul auf einfache Weise ausgetauscht oder nachgerüstet werden. Die Grundplatte 14 besteht aus einer Rahmenplatte 30 und einer Trägerplatte 32, die durch Nieten miteinander verbunden sind. Während die Rahmenplatte 30 mit dem Deformationselement 28 und damit der Fahrzeugstruktur 12 verbunden wird, ist der Gasgenerator 16 an der Trägerplatte 32 befestigt. Zur Befestigung der flexiblen Wandung 18 entlang ihres ersten geschlossenen Randes an der Grundplatte 14 ist hier eine Profilleiste 34 vorgesehen, die zwischen die Rahmenplatte 30 und die Trägerplatte 32 eingeklemmt wird. Die flexible Wandung 18 ist mit der Profilleiste 34 vernäht und ist zusätzlich zwischen der Profilleiste 34 und der Rahmenplatte 30 eingeklemmt. Auf einfache Weise wird hierdurch eine druckdichte und zugfeste Befestigung hergestellt. Der zweite geschlossene Rand der flexiblen Wandung 18 ist in der Ausführungsform der Fig. 4 durch eine umlaufende Falte 38 der flexiblen Wandung 18 gebildet, in die ein Verstärkungsring 36 eingelegt ist. Um den Verstärkungsring 36 in der Falte 38 zu sichern, ist die umlaufende Falte 38 der flexiblen Wandung 18 vernäht. Die Kniefängerplatte 10 weist ihrerseits eine umlaufende Bördelung 40 auf, die die umlaufende Falte 38 und den eingelegten Verstärkungsring 36 umgreift.

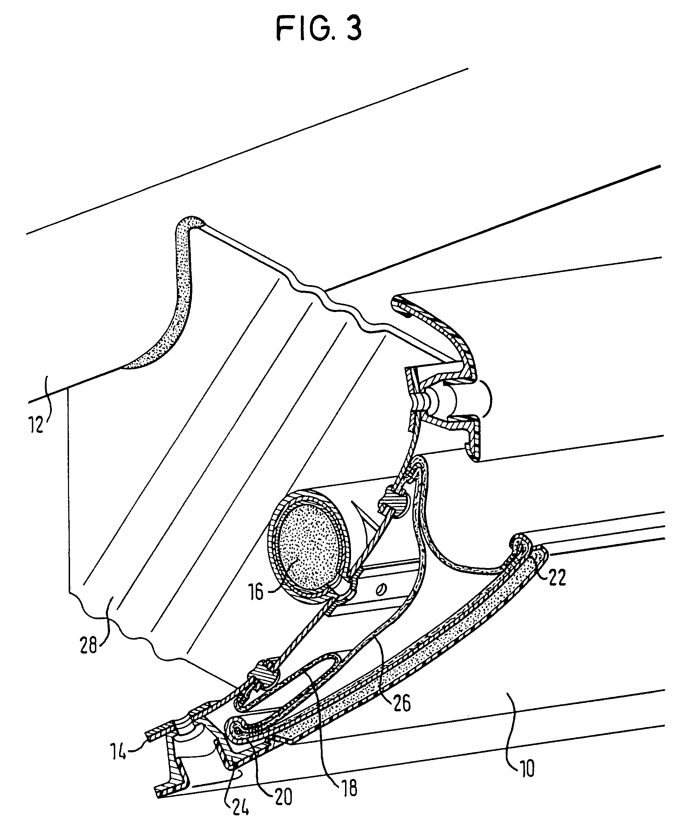

Fig. 3 zeigt eine weitere vorteilhafte Ausführungsform der erfindungsgemäßen Knie-Rückhalteeinrichtung, deren Kniefängerplatte 10 im teilweise ausgeschwenkten Zustand dargestellt ist. Zur verbesserten Steuerung der Bewegungsbahn der Kniefängerplatte 10 während des Aufblasvorgangs ist hier ein Segel 26 vorgesehen, das innerhalb des durch die Grundplatte 14, die flexible Wandung 18 und die Kniefängerplatte 10 gebildeten Volumens angeordnet ist. Nach Aktivierung des Gasgenerators 16 wird das Segel 26 durch von dem Gasgenerator 16 erzeugte Druckgase angeströmt. Da die untere Kante 20 der Kniefängerplatte 10 hinter der Leiste 24 gehalten ist, löst sich zunächst die ausreißbare Befestigung der oberen Kante 22 der Kniefängerplatte 10, so daß diese von der Grundplatte 14 weg nach außen schwenkt. Durch das Verschwenken der Kniefängerplatte 10 kann sich der obere Abschnitt des Segels 26 entfalten und erzeugt durch die Anströmung der Druckgase eine nach oben gerichtete Kraftkomponente. Hierdurch wird die Kniefängerplatte 10 nach oben gezogen, so daß die untere Kante 20 hinter der Leiste 24 vorgezogen wird. Erst nachdem die Leiste 24 die untere Kante 20 freigegeben hat, wird sich diese auch von der Grundplatte 14 weg nach außen bewegen. Da die Anströmung des Segels 26 die nach oben gerichtete Bewegungskomponente der Kniefängerplatte 10 bis zur Endposition aufrecht erhält, ist die Bewegungsbahn der Kniefängerplatte 10 während des Aufblasvorgangs von der Aktivierung des Gasgenerators 16 an bis zur Erreichung der Endposition der Kniefängerplatte 10 vorgegeben.

Fig. 4 zeigt die Knie-Rückhalteeinrichtung der Fig. 3 im aufgeblasenen Zustand, in dem die Kniefängerplatte 10 ihre Endposition erreicht hat. Der innerhalb des Volumens herrschende Überdruck bewirkt nun, daß die flexible Wandung 18 und das Segel 26 gespannt sind. In seinem nun gespannten Zustand legt das Segel 26 gemeinsam mit der flexiblen Wandung 18 die Endposition der Kniefängerplatte 10 fest. Die in der Fig. 3 dargestellte Endposition liegt dabei deutlich oberhalb der Ausgangsposition der Kniefängerplatte 10 im Ruhezustand der Knie-Rückhalteeinrichtung und ist durch den Zuschnitt der flexiblen Wandung 18 und den Zuschnitt des Segels 26 festgelegt. Das gespannte Segel 26 stabilisiert darüber hinaus auch die Kniefängerplatte 10 in ihrer Endposition, um ein seitliches oder nach oben oder unten gerichtetes Ausweichen der Kniefängerplatte beim Aufprall der Knie eines Fahrzeuginsassen zu vermeiden.

Abhängig von Einbaulage und Einbauort des erfindungsgemäßen Knie-Rückhaltesystems in einem Fahrzeug, kann auch eine Bewegung der Kniefängerplatte nach schräg unten erforderlich sein. Dies kann mit der Erfindung leicht verwirklicht werden, indem die obere Kante der Kniefängerplatte gegenüber der unteren Kante zurückgehalten wird. In analoger Weise zu den beschriebenen Ausführungsformen wird die Kniefängerplatte dann erst entlang ihrer oberen Kante von der Grundplatte gelöst, wenn sie bereits eine abwärts gerichtete Kraftkomponente erfährt.

## Patentansprüche

1. Knie-Rückhalteeinrichtung für Fahrzeuge, mit einer Kniefängerplatte (10), die in Richtung der Knie eines Fahrzeuginsassen bewegbar ist, einer mit einer Fahrzeugstruktur (12) verbindbaren Grundplatte (14), die wenigstens eine Öffnung zum Anschluß an einen Gasgenerator (16) aufweist, und einer im Ruhezustand zwischen der Grundplatte (14) und der Kniefängerplatte (10) gefalteten Wandung (18) aus flexiblem Material, die entlang eines ersten geschlossenen Randes mit der Grundplatte (14) und entlang eines zweiten geschlossenen Randes mit der Kniefängerplatte (10) verbunden ist, **dadurch gekennzeichnet, daß** eine erste, in Fahrzeugquerrichtung verlaufende Kante (20) der Kniefängerplatte (10) schwenkbeweglich und lösbar an der Grundplatte (14) gehalten ist, eine der ersten Kante (20) gegenüberliegende zweite Kante (22) der Kniefängerplatte (10) mit einer ausreißbaren Befestigung an der Grundplatte (14) gehalten ist, die bei Aktivierung des Gasgenerators (16) durch den Dehnungsdruck der sich entfaltenden Wandung (18) lösbar ist, bevor die Kniefängerplatte (10) um ihre erste Kante (20) verschwenkt und nachfolgend von der Grundplatte (14) gelöst wird.

2. Knie-Rückhalteeinrichtung nach Anspruch 1, **dadurch gekennzeichnet, daß** die erste Kante (20) der Kniefängerplatte (10) hinter einer fest an der Grundplatte (14) angeordneten Leiste (24) gehalten ist.

3. Knie-Rückhalteeinrichtung nach einem der vorstehenden Ansprüche, **dadurch gekennzeichnet, daß** innerhalb des durch die flexible Wandung (18), die Grundplatte (14) und die Kniefängerplatte (10) begrenzten Volumens ein einerseits mit der Grundplatte (14) und andererseits mit der Kniefängerplatte (10) verbundenes Segel (26) vorgesehen ist, das nach Aktivierung des Gasgenerators (16) in solcher Weise angeströmt wird, daß auf die Kniefängerplatte (10), nachdem deren erste Kante (20) von der Grundplatte (14) gelöst ist, ein Druck ausgeübt wird, durch den sie im wesentlichen parallel zu ihrer ausgeschwenkten Lage sowie von der Grundplatte (14) weg bewegt wird.

4. Knie-Rückhalteeinrichtung nach Anspruch 3, **dadurch gekennzeichnet, daß** das Segel (26) im entfalteten Zustand der Wandung (18) zusammen mit dieser eine Endposition der Kniefängerplatte (10) festlegt.

5. Knie-Rückhalteeinrichtung nach einem der vorstehenden Ansprüche, **dadurch gekennzeichnet, daß** die Grundplatte (14) mit der Fahrzeugstruktur (12) über ein mechanisches Deformationselement (28) verbunden ist.

6. Knie-Rückhalteeinrichtung nach einem der vorstehenden Ansprüche, **dadurch gekennzeichnet, daß** die Grundplatte (14) aus einer mit der Fahrzeugstruktur (12) verbundenen Rahmenplatte (30) und einer hieran befestigten Trägerplatte (32) besteht, die den Gasgenerator (16) trägt.

7. Knie-Rückhalteeinrichtung nach Anspruch 6, **dadurch gekennzeichnet, daß** die flexible Wandung (18) entlang des ersten geschlossenen Randes zwischen Rahmenplatte (30) und Trägerplatte (32) eingeklemmt ist.

8. Knie-Rückhalteeinrichtung nach Anspruch 6, **dadurch gekennzeichnet, daß** zwischen Rahmenplatte (30) und Trägerplatte (32) eine Profilleiste (34) gehalten ist, an der die flexible Wandung (18) entlang des ersten geschlossenen Randes befestigt ist.

9. Knie-Rückhalteeinrichtung nach einem der vorstehenden Ansprüche, **dadurch gekennzeichnet, daß** der zweite geschlossene Rand der flexiblen Wandung (18) durch eine umlaufende Falte (38) der flexiblen Wandung (18) gebildet ist und die Kniefängerplatte (10) eine umlaufende Bördelung (40) aufweist, die die umlaufende Falte (38) der flexiblen Wandung (18) umgreift.

10. Knie-Rückhalteeinrichtung nach Anspruch 9, **dadurch gekennzeichnet, daß** in die umlaufende Falte (38) der flexiblen Wandung (18) ein Verstärkungsring (36) eingelegt ist und die Bördelung (40) der Kniefängerplatte (10) die umlaufende Falte (38) und den eingelegten Verstärkungsring (36) umgreift.

11. Knie-Rückhalteeinrichtung nach einem der vorstehenden Ansprüche, **dadurch gekennzeichnet, daß** die flexible Wandung (18) einen von dem zweiten geschlossenen Rand umgebenen Abschnitt aufweist und einen Sack bildet, dessen Öffnung durch den ersten geschlossenen Rand festgelegt ist.

## Claims

1. A knee restraint device for vehicles, comprising a knee protector plate (10) movable in the direction of the knees of a vehicle occupant, a base plate (14) adapted to be connected to a vehicle structure (12) and having at least one opening for connection to a gas generator (16), and a wall (18) of flexible material folded between said base plate (14) and said knee protector plate (10) in the resting condition, said wall (18) being connected along a first closed rim to said base plate (14) and along a second closed rim to said knee protector plate (10), **characterized in that** a first edge (20) of said knee protector plate (10) oriented in the transverse direction of the vehicle is held for swivelling movement and in a releasable manner on said base plate (14), that a second edge (22) of said knee protector plate (10) located opposite said first edge (20) is held on said base plate (14) by a defeatable fastener which is releasable on activation of said gas generator (16) due to the expansion pressure of said wall (18) being deployed before said knee protector plate (10) has swivelled about its first edge (20) and has been subsequently released from said base plate (14).

2. The knee restraint device as set forth in claim 1, **characterized in that** said first edge (20) of said knee protector plate (10) is held behind a ledge (24) fixedly arranged on said base plate (14).

3. The knee restraint device as set forth in any of the preceding claims, **characterized in that** a sail (26) is provided within the volume defined by said flexible wall (18), said base plate (14) and said knee protector plate (10), said sail (26) being connected, on the one hand, to said base plate (14) and, on the other, to said knee protector plate (10), a flow impinging on said sail (26) in such a way on activation of said gas generator (16) that a pressure is exerted on said knee protector plate (10) after the first edge (20) of said knee protector plate (10) has been released from said base plate (14), this pressure causing said knee protector plate (10) to move substantially parallel to its swivelled-out position and away from said base plate (14).

4. The knee restraint device as set forth in claim 3, **characterized in that** said sail (26) defines a final position of said knee protector plate (10) in the deployed condition of said wall (18) together therewith.

5. The knee restraint device as set forth in any of the preceding claims, **characterized in that** said base plate (14) is connected to the vehicle structure (12) via a mechanical deformation element (28).

6. The knee restraint device as set forth in any of the preceding claims, **characterized in that** said base plate (14) consists of a frame plate (30) connected to the vehicle structure (12) and a mounting plate (32) secured to the latter, said mounting plate (32) mounting said gas generator (16).

7. The knee restraint device as set forth in claim 6, **characterized in that** said flexible wall (18) is clamped in place along the first closed rim between said frame plate (30) and said mounting plate (32).

8. The knee restraint device as set forth in claim 6, **characterized in that** a profiled ledge (34) is mounted between said frame plate (30) and said mounting plate (32), said flexible wall (18) being secured to said profiled ledge (34) along the first closed rim.

9. The knee restraint device as set forth in any of the preceding claims, **characterized in that** the second closed rim of said flexible wall (18) is formed by a surrounding fold (38) of said flexible wall (18) and said knee protector plate (10) comprises a surrounding beading (40) encompassing said surrounding fold (38) of the flexible wall (18).

10. The knee restraint device as set forth in claim 9, **characterized in that** a reinforcement ring (36) is inserted in said surrounding fold (38) of said flexible wall (18) and said beading (40) of said knee protector plate (10) encompasses said surrounding fold (38) and said inserted reinforcement ring (36).

11. The knee restraint device as set forth in any of the preceding claims, **characterized in that** said flexible wall (18) comprises a section surrounded by said second closed rim and forms a bag, the opening of the latter being defined by said first closed rim.

## Revendications

1. Dispositif de retenue de genoux pour véhicules, comprenant une plaque de protection de genoux (10) qui peut se déplacer en direction des genoux d'un occupant du véhicule, une plaque de base (14) qui peut être reliée à une structure de véhicule (12) et qui est pourvue d'au moins une ouverture pour le raccordement à un générateur de gaz (16), et une paroi (18) en matériau souple qui, en position de repos, est pliée entre la plaque de base (14) et la plaque de protection de genoux (10) et qui est reliée, le long d'un premier bord fermé, à la plaque de base (14) et, le long d'un second bord fermé, à la plaque de protection de genoux (10), **caractérisé en ce que**, s'étendant dans le sens transversal du véhicule, une première lisière (20) de la plaque de protection de genoux (10) est retenue sur la plaque de base (14) de manière pivotante et détachable, une seconde lisière (22) de la plaque de protection de genoux (10), située à l'opposé de la première lisière (20), est retenue sur la plaque de base (14) par une fixation arrachable et, lors de l'activation du générateur de gaz (16) peut se détacher de la paroi (18) en cours de dépliage sous l'effet de la pression d'expansion avant que la plaque de protection de genoux (10) ne pivote autour de sa première lisière (20) et ne se détache ensuite de la plaque de base (14).

2. Dispositif de retenue de genoux selon la revendication 1, **caractérisé en ce que** la première lisière (20) de la plaque de protection de genoux (10) est disposée derrière une barrette (24) montée fixe sur la plaque de base (14).

3. Dispositif de retenue de genoux selon l'une des revendications précédentes, **caractérisé en ce que**, à l'intérieur du volume délimité par la paroi souple (18), la plaque de base (14) et la plaque de protection de genoux (10), est prévue une voile (26) qui est reliée, d'une part, à la plaque de base (14) et, d'autre part, à la plaque de protection de genoux (10) et qui, après activation du générateur de gaz (16), est gonflée de façon que, sur la plaque de protection de genoux (10), une fois la première lisière (20) de celle-ci détachée de la plaque de base (14), soit exercée une pression qui a pour effet de la déplacer sensiblement parallèlement à sa position sortie et de l'éloigner de la plaque de base (14).

4. Dispositif de retenue de genoux selon la revendication 3, **caractérisé en ce que**, lorsque la paroi (18) est en position dépliée, la voile (26) détermine avec celle-ci une position extrême de la plaque de protection de genoux (10).

5. Dispositif de retenue de genoux selon l'une des revendications précédentes, **caractérisé en ce que** la plaque de base (14) est reliée à la structure de véhicule (12) par un élément de déformation mécanique (28).

6. Dispositif de retenue de genoux selon l'une des revendications précédentes, **caractérisé en ce que** la plaque de base (14) est constituée par une plaque-cadre (30) reliée à la structure de véhicule (12) et par une plaque-support (32) qui est fixée à la précédente et qui porte le générateur de gaz (16).

7. Dispositif de retenue de genoux selon la revendication 6, **caractérisé en ce que** la paroi souple (18) est coincée le long du premier bord fermé entre la plaque-cadre (30) et la plaque-support (32).

8. Dispositif de retenue de genoux selon la revendication 6, **caractérisé en ce que**, entre la plaque-cadre (30) et la plaque-support (32), est disposée une barrette profilée (34), à laquelle la paroi souple (18) est fixée le long du premier bord fermé.

9. Dispositif de retenue de genoux selon l'une des revendications précédentes, **caractérisé en ce que** le second bord fermé de la paroi souple (18) est formé par un pli enveloppant (38) de la paroi souple (18), et la plaque de protection de genoux (10) comporte un rabat enveloppant (40) qui entoure le pli enveloppant (38) de la paroi souple (18).

10. Dispositif de retenue de genoux selon la revendication 9, **caractérisé en ce qu'**un anneau de renfort (36) est inséré dans le pli enveloppant (38) de la paroi souple (18), et le rabat (40) de la plaque de protection de genoux (10) entoure le pli enveloppant (38) et l'anneau de renfort inséré (36).

11. Dispositif de retenue de genoux selon l'une des revendications précédentes, **caractérisé en ce que** la paroi souple (18) comporte une portion entourée par le second bord fermé et forme un sac dont l'ouverture est définie par le premier bord fermé.
